Europäisches Patentamt

European Patent Office

Office européen des brevets

(19)

(11) Publication number: **0 178 752**
**A1**

## (12) EUROPEAN PATENT APPLICATION

(21) Application number: 85304560.7

(22) Date of filing: 26.06.85

(51) Int. Cl.⁴: **C 08 L 21/00**
//(C08L21/00, 13:00)

(30) Priority: 14.09.84 US 650656

(43) Date of publication of application:
23.04.86 Bulletin 86/17

(84) Designated Contracting States:
AT BE CH DE FR GB IT LI LU NL SE

(71) Applicant: CAMERON IRON WORKS, INC.
13013 Northwest Freeway Northwest Crossing
Houston, TX 77040(US)

(72) Inventor: Vicic, John Chargles
2319 Encreek
Houston Texas 77068(US)

(74) Representative: Smith, Norman Ian et al,
F.J. CLEVELAND & COMPANY 40-43 Chancery Lane
London WC2A 1JQ(GB)

(54) Liquid rubber-toughened elastomer.

(57) Dispersed phase toughened high molecular weight elastomers are produced by incorporating a relatively low molecular weight telechelic polymer and a linking additive into said high molecular weight elastomer. The resulting product exhibits improved mechanical properties and improved processability as compared with the original high molecular weight elastomer and is useful in service where it is exposed to temperatures between −70°F and 400°F and to highly abrasive conditions.

EP 0 178 752 A1

Croydon Printing Company Ltd.

## DESCRIPTION

0178752

This invention relates to dispersed phase toughened elastomers. More particularly, it relates to elastomers, especially rubbers, which have been modified by the addition of a relatively low molecular weight liquid telechelic polymer phase to produce a highly extensible product which retains or surpasses the outstanding abrasion resistance and hot mechanical properties of the unmodified elastomer.

In oil well service, there is a growing demand for elastomers which can perform satisfactorily under extreme service conditions. For example, blowout preventer sealing elements are exposed to temperatures ranging from -70°F to 400°F and to abrasive environments which severely challenge the ability of the elastomer to survive for satisfactory lengths of time in service.

The addition of functional groups to high polymers is known to alter the properties of the resulting elastomer. When the functional group is incompatible with the high polymer the result is a dispersed phase elastomer in which the functional groups are dispersed throughout the high polymer. It is also known that when linking agents such as zinc oxide are reacted with the functionally modified high polymer a link is achieved which is usually incompatible with the high polymer and is dispersed in said polymer.

Presently known dispersed phase toughened rubbers such as carboxylated acrylonitrile butadiene rubbers exhibit outstanding abrasion resistance, hot mechanical properties and the like. In these rubbers, the reactive site (a carboxyl group) that produced the dispersed or incompatible phase has been directly attached to the main chain of the elastomer. When the cross linking agent is added to such functionally modified high polymers, many of these dispersed phase toughened rubbers have required specialized processing, utilizing specialized additives and the resulting cross linked rubbers often do not have many of the properties desired in a low modulus, highly extensible rubber. It also appeared that the improvement in properties were limited by the amount of functional site which could be added to the main polymer chain of the elastomer.

It has now been found that if the functional site that generates the incompatible dispersed phase is a component of a relatively low molecular weight liquid or semi-solid additive instead of being attached to the main high polymer chain, and this additive is blended with the unmodified high polymer, a number of advantages are obtained. The benefits afforded by such a system include most of the advantages of the previously known dispersed phase toughened high polymers but, more importantly, permit one to tailor a material to the intended application simply by proper selection of (1) low molecular weight additive, (2) the particular functional groups thereon and (3) the linking additives which react with the functional groups.

Thus the addition of functionality by the use of a low molecular weight additive vs the high polymer provides many more terminal sites for the functional groups for given weight of material. This additive may or may not be chemically compatible with the main constituent high polymer elastomer. Additionally, the low molecular weight additive polymer may be cure compatible with the high molecular weight component or alternately it may not enter into the curing reaction of the high molecular weight component whatsoever.

Telechelic polymers are readily available with a variety of functionalities, such as carboxyl, amine, hydroxy, epoxy and similar reactive groups which can be further modified prior to cross linking, e.g., by esterification and other known chemistries.

The linking additive may be chosen so as to form an ionomer which is dispersed in the high polymer, e.g., using a reactive metal compound, such as ZnO, CaO, or $Al_2O_3$, or the linking additive could be a multi-functional epoxide such as Epon 828, based on bisphenol-A and a diglycidyl ether, or it could be a metallic organic compound.

Selection of the linking additive may depend on the functional group in the telechelic polymer. While for carboxyl functionality metal oxides or hydroxides are the preferred linking agents; for amines or epoxy reactive groups the linking additive could be an organic or metallo organic compound such as a diamine or triamine; aluminum isopropoxide; naphthenates; aliphatic and aromatic epoxides, etc.

The advantages obtained from such a system include improved processability, superior mechanical properties compared to the same high polymer in an unmodified recipe, significantly improved hot mechanical properties and better dynamic fatigue resistance.

Elastomers to which the present invention is applicable include the following relatively high molecular weight polymers:

Natural Rubber

Synthetic Polyisoprene Rubber

Styrene Butadiene Rubbers

Polybutadiene

Butyl Rubber

Neoprene

Ethylene/Propylene Rubber

Acrylonitrile Butadiene Rubber

Silicone Rubber

Fluoroelastomers

Ethylene Acrylic Rubber

Vinyl Acetate Ethylene Copolymer

Epichlorohydrin Rubbers

Chlorinated Polyethylene Rubbers

Chlorosulfonated Polyethylene Rubbers

Hydrogenated Nitrile Rubber

Tetrafluoroethylene/propylene rubber


(1)  Low Molecular Weight Polymer Additive

The relatively low molecular weight polymers useful as additives in the present invention are polymers which have a molecular weight up to about 30,000 to 40,000 and preferably between about 1000 to about 8000.  They may be formed by polymerizing hydrocarbons with carbon-carbon backbones, such as olefins, or they may be polymers of acrylates, ethers, esters, or other polymerizable vinyl or vinylidene compounds. Homopolymers and copolymers have been successfully used in the practice of this invention.  The low molecular additive may be liquid, semi-solid, or semi-solid.  Particularly preferred low molecular weight polymers utilized in the following examples include carboxyl terminated butadiene acrylonitrile copolymer and carboxyl terminated acrylonitrile polybutadiene polymer. Instead of a single telechelic polymer a mixture of such polymers with like or unlike reactive groups may be used. Similarly the invention may be practiced with a mixture of high molecular weight elastomers rather than a single such polymer.

### (2)  Functional Groups

The preferred functional groups present in the low molecular weight additive polymer are carboxyl (COOH) groups. Preferably, an average of from 1.5 to 2.5 functional groups are present per polymer molecule. Other functional groups which are useful instead of carboxyl groups include amine, ether, epoxy, hydroxy, halogen and other reactive groups which are known in the art for the provision of reactive, functional sites.

### (3)  Linking Additives

The linking additive provides both linking and the incompatibility which may be required for a dispersed phase in the end product. Various metal salts have been used for this purpose. The preferred linking additive is zinc oxide. Calcium oxide is another material which has been found useful in place of zinc oxide. Other materials which may be used as linking additives include aluminum oxide or hydroxide. The linking additive may be present in amounts which react with all or only a fraction of the functional groups. Usually at least 50% of the functional groups are reacted in order to provide a significant content of incompatible dispersed phase.

### (4) Proportions

In preparing the improved dispersed phase composition, the several constituents noted above are present in the following relative proportions, in parts by weight per 100 parts by weight of high polymer elastomer:

(1) Low Molecular Weight Polymer Additive 5 to 70, preferably 5-25 depending on the properties desired;

(2) Linking Additive 1 to 25.

The examples which follow illustrate preferred embodiments of the invention and are not intended to limit the same.

In the examples illustrating the application of the invention to acrylonitrile butadiene rubbers, a variety of liquid polymers were used, identified in the following table by the letters A through G. Polymers A, B, C, E and G are commercially available carboxyl terminated acrylonitrile butadiene copolymers sold commercially as Hycars by B.F. Goodrich and having an average molecular weight of 3500. Polymer D is a butadiene acrylonitrile copolymer with no carboxyl functionality and represents a control, and Polymer F is a carboxyl terminated butadiene polymer.

LOW MOLECULAR WEIGHT LIQUID POLYMER DATA

| Code Name | Brookfield Viscosity Mpa"S(CP) @ 27°C (79°F) | Nominal Carboxyl Content (EPHR)* | Function-ality | Acrylo-nitrile Content |
|---|---|---|---|---|
| A) CTBN 1300 x 13 | 570,000 | 0.057 | 1.8 | 26 |
| B) CTBN 1300 x 8 | 150,000 | 0.052 | 1.8 | 18 |

| C) CTBN 1300 x 9 | 160,000 | 0.067 | 2.3 | 18 |
|---|---|---|---|---|
| D) BN 1312 | - | 0.000 | N/A | 33 |
| E) CTBN 1300 x 31 | 60,000 | 0.050 | 1.9 | 10 |
| F) CTB 2000 x 165 | 33,000 | 0.050 | 2.0 | 0 |
| G) CTBN 1300 x 18 | 350,000 | 0.070 | 2.3 | 22 |

*Equivalents per hundred rubber in formula.

Using conventional rubber industry mixing procedures, an unmodified high polymer formulation and formulations with the above low molecular weight liquid polymers were prepared with the following ingredients, all parts being in parts by weight,

| Control | Invention | |
|---|---|---|
| 100 | 90 | Polybutadiene rubber gum stock (Taktene 220) |
| - | 10 | Low M.W. polymer additive |
| 60 | 60 | Carbon black filler (N-550) |
| 1 | 1 | Stearic acid (Lubricant) |
| 1.5 | 1.5 | Sulfur (curing agent) |
| 1.0 | 1.0 | Accelerator (AMAX) |
| 1 | 1 | Antioxidant (Agerite Resin) |
| (Variable) | | Linking additive |

Formulations were prepared by mixing the rubber gum stock and low molecular weight polymer additive, lubricant and carbon black to form a masterbatch to which sulfur (1.5 phr), accelerator (1.0 phr), zinc oxide (2, 6, 10 phr), and antioxidant (1 phr) were added. With 6 parts of zinc oxide and 10 parts of additive the properties obtained in batches which had been cured 10 minutes at 350°F were as follows:

TABLE I

| | Control | A | B | C | D | E | F | G |
|---|---|---|---|---|---|---|---|---|
| **Original Mechanical Properties, Cured 10 Min. @ 350°F** | | | | | | | | |
| Tensile Strength, psi | 1282 | 1500 | 1049 | 710 | 1731 | 1143 | 1317 | 1185 |
| 50% Modulus, psi | 128 | 194 | 185 | 161 | 169 | 156 | 162 | 179 |
| 100 Modulus, psi | 182 | 333 | 254 | 258 | 267 | 260 | 270 | 304 |
| 200 Modulus, psi | 462 | 845 | 635 | 567 | 716 | 571 | 634 | 744 |
| 300 Modulus, psi | 923 | 1370 | 1049 | – | 1313 | 987 | 1120 | – |
| Elongation, % | 370 | 310 | 300 | 250 | 370 | 330 | 340 | 280 |
| Microhardness, IRHD | 53 | 66 | 57 | 54 | 61 | 56 | 58 | 61 |
| Tear Strength, Die C, ppi | 122 | 92 | 87 | 125 | 162 | 75 | 83 | 83 |
| **Mechanical Properties @ 250°F** | | | | | | | | |
| Tensile Strength, psi | 754 | 960 | 667 | 367 | 939 | 693 | 720 | 737 |
| 50% Modulus, psi | 108 | 187 | 194 | 102 | 121 | 152 | 99 | 173 |
| 100% Modulus, psi | 162 | 293 | 286 | 179 | 242 | 222 | 198 | 296 |
| 200$ Modulus, psi | 373 | 640 | 516 | 333 | 576 | 400 | 395 | 543 |
| 200% Modulus, psi | 638 | – | 667 | – | – | 587 | 642 | – |
| Elongation, % | 340 | 280 | 300 | 230 | 270 | 350 | 320 | 270 |
| Tear Strength, Die C, ppi | 84 | 98 | 96 | 33 | 176 | 94 | ⸱⸱ | 75 |

0178752

As seen from the results the samples representing this invention (A to C and E to G) exhibit generally higher moduli and generally higher microhardness. But what is even more significant is the retention or even general improvement in mechanical properties such as tensile strength both at room temperature and at 250°F, in contrast to the normally expected lowering of these properties, usually experienced when a low molecular weight liquid is added to a high molecular weight polymer.

For instance comparing the tear strengths of the control it will be noted that it dropped from 122 to 84 whereas for formulation A, B, E and F it actually increased or decreased only slightly (G). One possible explanation for the result in C may be the presence of a much higher degree of functionality in the low molecular weight liquid polymer additive, or the difference in viscosity.

The effect of various levels of linking agent (zinc oxide) was investigated for similar formulations made with a polybutadiene nitrile rubber without any carboxyl functionality (Table II); and for similar formulations made with 10 parts by weight of carboxyl-terminated butadiene acrylonitrile rubber (CTBN 1300 x 13). The results are shown in Tables II and III.

## TABLE II

### With No Liquid Polymer Additive

| | 2ZnO | 6ZnO | 10ZnO |
|---|---|---|---|
| **Original Mechanical Properties** | | | |
| Tensile Strength, psi | 1194 | 1282 | 1370 |
| 50% Modulus, psi | 116 | 128 | 111 |
| 100% Modulus, psi | 174 | 182 | 194 |
| 200% Modulus, psi | 377 | 462 | 500 |
| 300% Modulus, psi | 776 | 923 | 1000 |
| Elongation, % | 390 | 370 | 380 |
| Microhardness, IRHD | 51 | 53 | 54 |
| Tear Strength, Die C, ppi | 134 | 122 | 88 |

## TABLE III

### With 10 Parts of Low Molecular Weight Polymer Additive

| | 2ZnO | 6ZnO | 10ZnO |
|---|---|---|---|
| **Original Mechanical Properties** | | | |
| Tensile Strength, psi | 1256 | 1500 | 1459 |
| 50% Modulus, psi | 160 | 194 | 189 |
| 100% Modulus, psi | 267 | 333 | 320 |
| 200% Modulus, psi | 641 | 845 | 1351 |
| 300% Modulus, psi | 1256 | 1370 | 1351 |
| Elongation, % | 300 | 310 | 320 |
| Microhardness, IRHD | 62 | 66 | 64 |
| Tear Strength, Die C, ppi | 103 | 92 | 103 |

Mechanical Properties @ 250°F

| | | | |
|---|---|---|---|
| Tensile Strength, psi | 756 | 960 | 784 |
| 50% Modulus, psi | 133 | 187 | 162 |
| 100% Modulus, psi | 240 | 293 | 270 |
| 200% Modulus, psi | 533 | 640 | 595 |
| 300% Modulus, psi | - | - | - |
| Elongation, % | 260 | 280 | 250 |
| Tear Strength, Die C, ppi | 105 | 98 | 115 |

Comparing the results in Tables II and III it will be seen that the hardness has been significantly increased (important for abrasion resistance) and the tensile has been improved rather than being decreased as would be expected from the addition of a low molecular liquid to the basic high polymer. The products in Table III were softer and more readily processable and had noticeably better green tack. The tear strength at high temperatures (250°F) was unexpectedly superior to that at room temperature, instead of being decreased by such an addition.

A similar study was made with CaO as the linking material, using 4.2 parts of CaO (0.1497 equivalents) for each 10 parts of additive polymer and using low molecular weight liquid polymers A, B, C, F and G in the following formulation in parts by weight:

|  | Control | With Additive |
|---|---|---|
| Polybutadiene rubber gum stock (Taktene 220) | 100 | 90 |
| Low molecular weight polymer additive | 0 | 10 |
| Carbon black (N-550) | 60 | 60 |
| Lubricant (stearic acid) | 1 | 1 |
| Antioxidant (Agerite Resin) | 1 | 1 |
| Cure accelerator (AMAX) | 1 | 1 |
| Sulfur | 1.5 | 1.5 |

The above formulation was prepared by mixing the ingredients as in the previous examples, using 4.2 parts of CaO as the linking additive. After curing at 350°F for 10 minutes the mechanical properties are shown in Table IV.

The results were as follows:

TABLE IV

|  | Control | A | B | C | F | G |
|---|---|---|---|---|---|---|
| Original Mechanical Properties, Cured 10 Min. @ 350°F | | | | | | |
| Tensile Strength, psi | 1506 | 1821 | 1370 | 1443 | 1264 | 1477 |
| 50% Modulus, psi | 116 | 192 | 164 | 182 | 186 | 195 |
| 100% Modulus, psi | 182 | 306 | 263 | 273 | 282 | 296 |
| 200% Modulus, psi | 468 | 722 | 567 | 545 | 612 | 716 |
| 300% Modulus, psi | 950 | 1278 | 1015 | 962 | 1037 | 1227 |
| Elongation, % | 410 | 420 | 390 | 430 | 360 | 370 |
| Microhardness, IRHD | 53 | 66 | 62 | 62 | 63 | 64 |
| Tear Strength, Die C, ppi | 130 | 236 | 120 | 232 | 105 | 96 |

Mechanical Properties @ 250°F

| Tensile Strength, psi | 754 | 1000 | 800 | 819 | 683 | 810 |
|---|---|---|---|---|---|---|
| 50% Modulus, psi | 108 | 158 | 171 | 180 | 161 | 152 |
| 100% Modulus, psi | 162 | 237 | 240 | 241 | 230 | 253 |
| 200% Modulus, psi | 373 | 500 | 427 | 434 | 414 | 456 |
| 300% Modulus, psi | 638 | 889 | 693 | 674 | 644 | 734 |
| Elongation, % | 340 | 320 | 320 | 370 | 330 | 310 |
| Tear Strength, Die C, ppi | 84 | 172 | 133 | 146 | 117 | 121 |

Again it will be seen that the mechanical properties generally are improved by the addition of the low molecular weight telechelic polymer to the unmodified high polymer. For example, the room temperature and moduli microhardness are both noticeably increased and this is even more evident in these properties at 250°F.

In the preceding examples the average molar ratio of metal oxide to carboxyl groups was about 25.5 to 1 thus providing a slight excess of the linkage additive and insuring that virtually all of the carboxyl groups reacted with the linking agent.

Dispersed phase toughened elastomers prepared in accordance with this invention are useful in the fabrication of mechanical rubber goods intended to be used in severe environments where they are exposed to high temperatures and high mechanical stresses, for example: seals, blowout preventer packers, belts, tires and similar articles.

Having now described preferred embodiments of the invention it is not intended that it be limited except as may be required by the appended claims:

0178752

## CLAIMS

1. A high molecular weight elastomer modified by the addition thereto of (a) between 5 and 75 parts by weight of a relatively low molecular weight liquid or semi-solid telechelic polymer containing between 1.5 and 2.5 functional groups per low molecular weight polymer molecule and (b) between about 1 and 25 parts by weight of a linking additive per one hundred parts by weight of high molecular weight elastomer, whereby a dispersed phase toughened elastomer is produced with improved mechanical properties and improved processability as compared with the mechanical properties of the original high molecular weight elastomer.

2. The product of claim 1 wherein the elastomer is natural rubber.

3. The product of claim 1 wherein the high molecular weight elastomer is selected from the group of synthetic polymers consisting of

Synthetic Polyisoprene Rubber

Styrene Butadiene Rubbers

Polybutadiene

Butyl Rubber

Neoprene

Ethylene/Propylene Rubber

Acrylonitrile Butadiene Rubber

Silicone Rubber

Fluoroelastomers

Ethylene Acrylic Rubber

Vinyl Acetate Ethylene Copolymer

Epichlorohydrin Rubbers

Chlorinated Polyethylene Rubbers

Chlorosulfonated Polyethylene Rubbers

Hydrogenated Nitrile Rubber

Tetrafluoroethylene/propylene rubber

4.    The product of claim 3 wherein the elastomer is a synthetic rubber.

5.    The product of claim 4 wherein the elastomer is a polybutadiene or a butadiene copolymer selected from the group consisting of styrene butadiene rubbers and acrylonitrile butadiene rubbers.

6.    The product of claim 1 wherein the low molecular weight telechelic polymer is a polymer having a molecular weight up to about 48,000.

7.    The product of claim 6 wherein the molecular weight is between about 1000 and 8000.

8.    The product of claim 6 wherein the telechelic polymer is carboxyl terminated.

9.    The product of claim 6 wherein the low molecular weight telechelic polymer is a carboxyl terminated acrylonitrile butadiene copolymer with a molecular weight of about 3500.

10.    The product of claim 1 wherein linking additive is selected from the group consisting metal oxides, hydroxides and salts, metallo organic compounds, and organic compounds.

11.    The product of claim 10 wherein the linking agent is a metal oxide or hydroxide of a metal with a valence or coordination number of at least 2.

12.    The product of claim 11 wherein the linking additive is an inorganic compound selected from the group consisting of zinc oxide, calcium oxide, calcium hydroxide and aluminum hydroxide and mixtures thereof.

13. The product of claim 12 wherein telechelic polymer is an acrylonitrile butadiene copolymer.

14. The product of claim 1 wherein a mixture of telechelic low molecular weight polymers is used.

15. The product of claim 1 wherein the telechelic polymer is incompatible with the high polymer elastomer.

16. The product of claim 1 wherein the telechelic polymer is a liquid.

17. A mixture from which a dispersed phase toughened elastomer may be prepared, having improved mechanical properties and improved processability as compared with the unmodified elastomer, comprising:

a high molecular weight elastomer,

a telechelic relatively low molecular weight polymer, and

a linking additive in which the proportions of said constituents are from 5 to 75 parts of low molecular weight polymer and from 1 and 25 parts of linking additive per 100 parts as weight of elastomer.

18. The mixture of claim 17 including in addition a curing agent, an antioxidant and a cure accelerator.

19. A process for preparing a dispersed phase toughened elastomer from a high molecular weight elastomer which comprises incorporating a low molecular weight telechelic polymer and a linking agent into said high molecular weight polymer so as to form at least some reaction products which are incompatible with said high polymer and thereafter curing the resulting material.

20. Each and every invention disclosed.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 242 129 (C.R. WILDER)<br><br>* Claim 1; examples * | 1,3-7, 10-12, 15-20 | C 08 L 21/00 //<br>(C 08 L 21/00<br>C 08 L 13:00 ) |
| X | CHEMICAL ABSTRACTS, vol. 82, 21st April 1975, page 101, no. 99724s, Columbus, Ohio, US; & JP - A - 74 115 137 (KURARAY CO., LTD.) 02-11-1974<br>* Abstract * | 1,3-8, 10-12, 15-20 | |
| A | US-A-3 274 147 (R.P. ZELINSKY et al.)<br>* Claim 1 * | | |

---

TECHNICAL FIELDS
SEARCHED (Int. Cl.4)

C 08 L

The present search report has been drawn up for all claims

| Place of search<br>THE HAGUE | Date of completion of the search<br>03-01-1986 | Examiner<br>VAN HUMBEECK F.W.C. |
|---|---|---|

EPO Form 1503 03 82